# EUROPEAN PATENT APPLICATION

(11) **EP 1 868 204 A1**
(43) Date of publication of application: **19.12.2007**
(21) Application number: 07109371.0
(22) Date of filing: 31.05.2007
(51) Int. Cl.: G11B 27/034, G11B 27/32, G11B 27/30

(54) **Information recording apparatus and information playback apparatus**

(30) Priority: 13.06.2006 JP 2006163771
(71) Applicant: Kabushiki Kaisha Toshiba, Minato-ku, Tokyo 105-8001 (JP)
(72) Inventor: Shibutani, Manabu, Tokyo 105-8001 (JP)
(74) Representative: Henkel, Feiler & Hänzel

(57) **Abstract**

According to one embodiment, an information recording apparatus which converts an HD DVD-VR content recorded based on the HD DVD-VR format into an interoperable content compatible with the HD DVD-Video format, and records the interoperable content, switches (ST22, ST23, ST24, ST25) the generation processing of a title for the interoperable content in accordance with each of a case in which the HD DVD-VR content comprises a title which includes video objects but does not include stream objects, a case in which the HD DVD-VR content comprises a title which does not include the video objects but includes the stream objects, and a case in which the HD DVD-VR content comprises a title which includes both the video objects and the stream objects.

## Description

One embodiment of the invention relates to an information recording apparatus for recording data compatible with the format of an HD DVD as a next-generation optical disc. Another embodiment of the invention relates to an information playback apparatus for playing back data compatible with the HD DVD format.

As is known, there are various formats for the existing DVD. For example, the DVD Video format (to be referred to as DVD-Video format hereinafter) and DVD Video Recording format (to be referred to as DVD-VR format hereinafter) are known.

A player compatible with only the DVD-Video format cannot play back video information recorded based on the DVD-VR format. In order to allow the player compatible with only the DVD-Video format to play back the video information recorded based on the DVD-VR format, data conversion is required in advance. That is, the video information recorded based on the DVD-VR format need be converted into that based on the DVD-Video format. Jpn. Pat. Appln. KOKAI Publication No. 2003-199046 discloses a technique for converting video information recorded based on the DVD-VR format into that based on the DVD-Video format.

HD DVD discs as the next-generation optical discs that can support high-definition video recording have been standardized with respect to the aforementioned existing DVD formats. The HD DVD format also includes the HD DVD Video format (to be referred to as HD DVD-Video format hereinafter) and HD DVD Video Recording format (to be referred to as HD DVD-VR format hereinafter), and compatibility between these formats is an issue.

It is an object of the invention to provide an information recording apparatus which is excellent to convert an HD DVD-VR content compatible with the HD DVD-VR format into an interoperable content compatible with the HD DVD-Video format and record the interoperable content. It is another object of the invention to provide an information playback apparatus which can play back the interoperable content.

An information recording apparatus according to one aspect of the invention is an information recording apparatus, which converts an HD DVD Video Recording (HD DVD-VR) content recorded in an HD DVD-VR format into an interoperable content compatible with the HD DVD-Video format and records the interoperable content, comprising: an analysis unit configured to analyze navigation data included in the HD DVD-VR content; a generation unit configured to generate a playlist file and a video title set information file based on the navigation data, and to generate the interoperable content which includes the playlist file, the video title set information file, and a title including video objects included in the HD DVD-VR content; and a recording unit configured to record the interoperable content generated by the generation unit at a predetermined recording location, wherein the generation unit switches generation processing of a title for the interoperable content in accordance with each of a first case in which the HD DVD-VR content comprises a first title which includes the video objects but does not include stream objects, a second case in which the HD DVD-VR content comprises a second title which does not include the video objects but includes the stream objects, and a third case in which the HD DVD-VR content comprises a third title which includes both the video objects and the stream objects, the navigation data included in the HD DVD-VR content navigates playback of the video objects and stream objects included in the HD DVD-VR content, the playlist file included in the interoperable content indicates the configuration of the title and chapters for the interoperable content, and the video title set information included in the interoperable content indicates attributes of the video objects included in the interoperable content.

An information playback apparatus according to one aspect of the invention, comprises: a read unit configured to read a configuration file from a predetermined recording location; and a playback unit configured to play back an interoperable content compatible with the HD DVD-Video format from the predetermined recording location based on the configuration file read by the read unit, wherein the playback unit plays back a title made up of video objects included in the interoperable content, and plays back a dummy title made up of data which is included in the interoperable content and gives an indication that the title cannot be played back.

The invention can be more fully understood from the following detailed description when taken in conjunction with the accompanying drawings, in which:
FIG. 1 is a schematic block diagram showing the arrangement of a recorder (information recording apparatus) for recording an interoperable content and a player (information playback apparatus) for playing back the interoperable content according to an embodiment of the invention;
FIG. 2 is a flowchart showing generation of an interoperable content according to the embodiment;
FIG. 3 is a flowchart showing processing for checking the types of titles included in an HD DVD-VR content and switching the generation processing of an interoperable content in accordance with the checking result according to the embodiment;
FIG. 4 shows a menu window according to the embodiment;
FIG. 5 is a flowchart showing the startup sequence by a DVD player according to the embodiment;
FIG. 6 is a view showing the relationship between the HD DVD-VR content and interoperable content according to the embodiment;
FIG. 7 is a table (No. 1) showing an overview of values to be filled in data fields of VTSI for an interoperable content according to the embodiment;
FIG. 8 is a table (No. 2) showing an overview of values to be filled in data fields of VTSI for an interoperable content according to the embodiment;
FIG. 9 is a table (No. 3) showing an overview of values to be filled in data fields of VTSI for an interoperable content according to the embodiment;
FIG. 10 is a view showing conversion from the HD DVD-VR content into the interoperable content according to the embodiment;
FIG. 11 is a table showing an overview of values to be filled in data fields of a configuration file for an interoperable content according to the embodiment;
FIG. 12 shows an example of the configuration of a standard content according to the embodiment;
FIG. 13 shows an example of the configuration of an advanced content according to the embodiment;
FIG. 14 shows a playlist generated based on the HD DVD-VR content according to the embodiment; and
FIG. 15 shows the playlist generated based on the HD DVD-VR content (sequel of FIG. 14) according to the embodiment.

Various embodiments according to the invention will be described hereinafter with reference to the accompanying drawings. In general, according to one embodiment of the invention, an information recording apparatus is an information recording apparatus, which converts an HD DVD Video Recording (HD DVD-VR) content recorded in an HD DVD-VR format into an interoperable content compatible with the HD DVD-Video format and records the interoperable content, comprising: an analysis unit configured to analyze navigation data included in the HD DVD-VR content; a generation unit configured to generate a playlist file and a video title set information file based on the navigation data, and to generate the interoperable content which includes the playlist file, the video title set information file, and a title including video objects included in the HD DVD-VR content; and a recording unit configured to record the interoperable content generated by the generation unit at a predetermined recording location, wherein the generation unit switches generation processing of a title for the interoperable content in accordance with each of a first case in which the HD DVD-VR content comprises a first title which includes the video objects but does not include stream objects, a second case in which the HD DVD-VR content comprises a second title which does not include the video objects but includes the stream objects, and a third case in which the HD DVD-VR content comprises a third title which includes both the video objects and the stream objects, the navigation data included in the HD DVD-VR content navigates playback of the video objects and stream objects included in the HD DVD-VR content, the playlist file included in the interoperable content indicates the configuration of the title and chapters for the interoperable content, and the video title set information included in the interoperable content indicates attributes of the video objects included in the interoperable content.

One embodiment of the invention will be described below with reference to the accompanying drawings.

The HD DVD format includes the HD DVD Video format (to be referred to as HD DVD-Video format hereinafter) and HD DVD Video Recording format (to be referred to as HD DVD-VR format hereinafter). An HD DVD-Video player cannot play back an HD DVD-VR content recorded based on the HD DVD-VR format intact. To solve this problem, an HD DVD-VR recorder that supports the HD DVD-VR format can have a function of converting an HD DVD-VR content into an interoperable content compatible with the HD DVD-Video format, and recording the interoperable content. In this way, the HD DVD-Video player can play back the interoperable content recorded by the HD DVD-VR recorder.

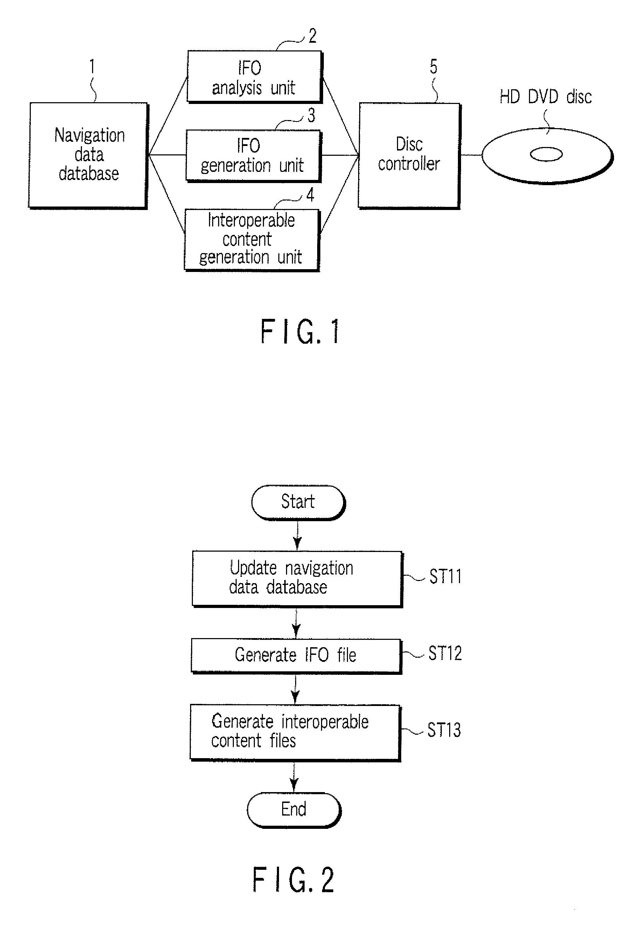

FIG. 1 shows an example of a schematic arrangement of a recorder (information recording apparatus) that records an interoperable content. Note that FIG. 1 also shows a player (information playback apparatus) that plays back an interoperable content. As shown in FIG. 1, the recorder comprises a navigation data database 1, IFO analysis unit 2, IFO generation unit 3, interoperable content generation unit 4, and disc controller 5.

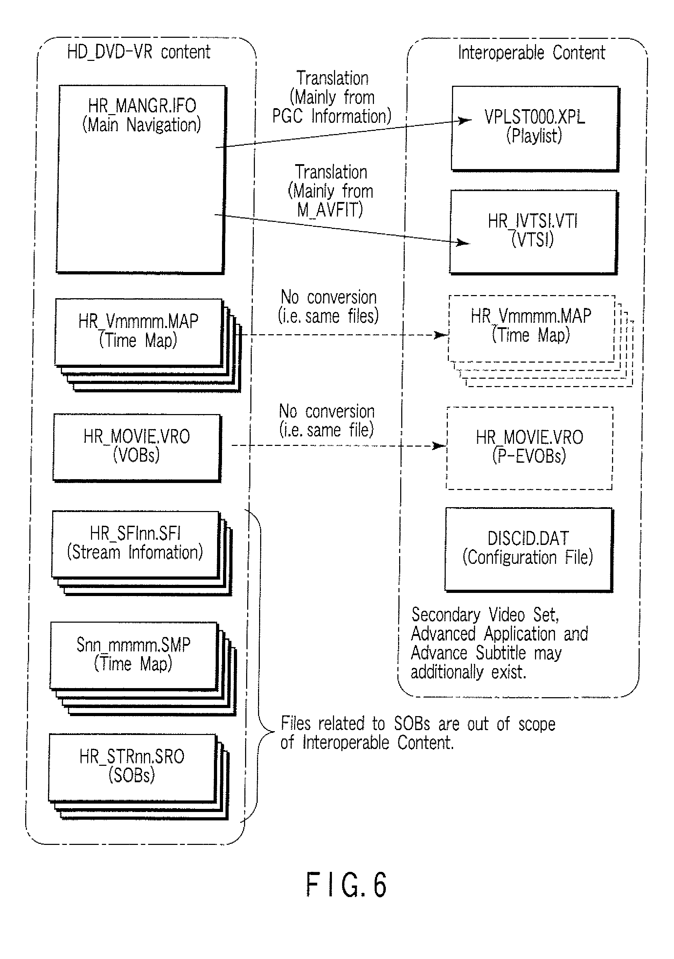

The generation processing of an interoperable content by the recorder shown in FIG. 1 will be described below. FIG. 6 shows the relationship between the HD DVD-VR content and interoperable content. FIG. 2 is a flowchart showing a first generation example of an interoperable content.

The recorder shown in FIG. 1 records, for an interoperable content, at least:
- a configuration file;
- a playlist file; and
- a video title set information (VTSI) file in addition to files recorded in the HD-VR format.

Also, image files and font files need be recorded upon generating a content which displays menus using markup files.

The playlist file is information indicating the configurations and the like of a title and chapters including VOBs (video objects). The VTSI file is information indicating attributes and the like of VOBs.

When an HD DVD-VR disc is inserted into the recorder, the disc controller 5 of the recorder starts read and write accesses of data with respect to the inserted disc. As a result, the IFO analysis unit 2 analyzes an HR_MANGR.IFO file (to be referred to as an IFO file hereinafter) as navigation data recorded on the disc. The navigation data navigates playback of VOBs (video objects) and SOBs (stream objects) included in an HD DVD-VR content. The analysis result of the navigation data is stored in the navigation data database 1.

After that, when the user makes video recording and edit operations on the disc, the navigation data database 1 updates the contents of the navigation data database in response to these operations (ST11). The IFO generation unit 3 generates an IFO file based on information of the updated navigation data database (ST12). The disc controller 5 records the generated IFO file on the disc.

The interoperable content generation unit 4 generates files (configuration file, playlist file, and video title set information file) for an interoperable content (ST13), and the disc controller 5 records the generated files on the disc. Note that time map data and VOBs (video objects) which are included in the HD DVD-VR content are respectively handled as time map data and P-EVOBs (primary enhanced video objects) in the interoperable content without being converted. As described above, the interoperable content include the time map data and P-EVOBs in addition to the configuration file, playlist file, and video title set information file.

When files are recorded in the above sequence, no information difference is generated between the IFO file and the files for the interoperable content.

The HD DVD-VR format includes VOBs (video objects) and SOBs (stream objects) as content types. However, an interoperable content conforms to the HD DVD-Video format, which can handle only a content made up of VOBs. That is, the interoperable content cannot handle a content made up of SOBs. Hence, upon creating titles of an interoperable content, the types of titles included in an HD DVD-VR content are checked, and the generation processing of an interoperable content is switched in accordance with the checking result.

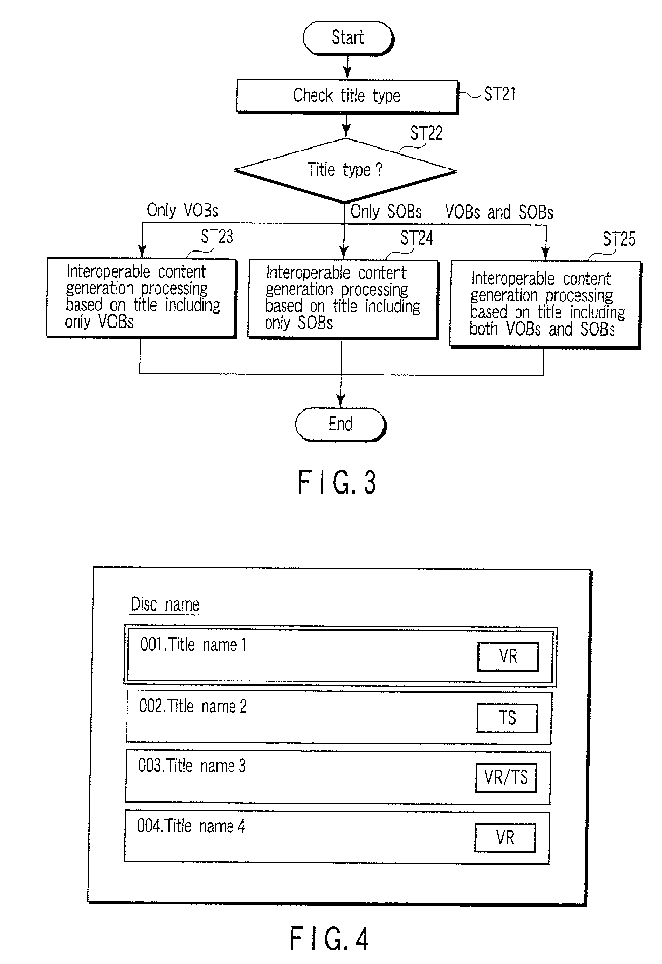

FIG. 3 is a flowchart showing an example of the processing for checking the types of titles included in an HD DVD-VR content and switching generation processing of an interoperable content in accordance with the checking result. As shown in FIG. 3, assume that a title type is checked (ST21) and, as a result, it is determined that a title included in an HD DVD-VR content is made up of only VOBs (only VOBs in step ST22). That is, a first case in which an HD DVD-VR content comprises a title (to be referred to as a first title hereinafter) which includes VOBs but does not include any SOBs is assumed. In this first case, a title of an interoperable content includes all contents of the first title, i.e., all VOBs included in the first title. That is, in this first case, an interoperable content comprising the first title is generated (ST23).

Subsequently, assume that it is determined that a title included in an HD DVD-VR content is made up of only SOBs (only SOBs in ST22). That is, a second case in which an HD DVD-VR content comprises a title (to be referred to as a second title hereinafter) that does not include any VOBs but includes SOBs is assumed. The second title is not compatible with an interoperable content. Therefore, in this second case, an interoperable content which does not comprise the second title is generated (ST24).

Alternatively, in this second case, an interoperable content which comprises a dummy title different from the second title may be generated. The dummy title is made up of, e.g., an advanced application. The dummy title is a title that displays, e.g., a black-out window for several seconds. By generating such dummy title, the number of titles and title order on the HD DVD-VR format can correspond to those on the interoperable content, thus preventing user's confusion.

Next, assume that it is determined that a title included in an HD DVD-VR content is made up of both VOBs and SOBs (both VOBs and SOBs in ST22). That is, a third case in which an HD DVD-VR content comprises a title (to be referred to as a third title hereinafter) which includes both VOBs and SOBs is assumed. In this third case, an interoperable content which comprises a title that has undergone conversion processing, i.e., that includes VOBs included in the third titles and does not include any SOBs included in the third title, is generated (ST25). In this way, a content which can be played back in the HD DVD-Video format is ready to be played back.

Alternatively, in this third case, an interoperable content which does not comprise the third title may be generated. A title which allows to play back only a part of a title included in the HD DVD-VR content may cause user's confusion. However, by generating the interoperable content which does not comprise the third title, user's confusion can be prevented.

Alternatively, in this third case, an interoperable content which comprises a dummy title different from the third title may be generated. The dummy title is made up of, e.g., an advanced application. The dummy title is a title that displays, e.g., a black-out window for several seconds. By generating such dummy title, the number of titles and title order on the HD DVD-VR format can correspond to those on the interoperable content, thus preventing user's confusion.

The generation sequence of a menu file for an interoperable content will be described below.

In the interoperable content, a content which displays images and characters on the screen, and changes the display state or plays back a title in response to a user's key operation by an advanced application can be generated.

Using this function, a menu window which displays information of titles on the screen and plays back a title selected by a key operation is generated. FIG. 4 shows an example of the menu window. At this time, as this menu window, a content which distinguishably displays the aforementioned title types is generated. With this menu window, the user can recognize the configuration of the original titles of the HD DVD-VR format.

A title which is not generated, or a title that displays a black-out window for several seconds by an advanced application or the like is inhibited from being played back if it is selected. A content is configured so that the text color of title names is set as a pale color (e.g., gray) to look different from those of titles that can be played back. With this configuration, the user can recognize that the selected title cannot be played back.

As described above, appropriate interoperable contents can be generated in the case wherein the title of the HD DVD-VR content includes only VOBs, the case wherein the title includes only SOBs, and the case wherein the title includes both VOBs and SOBs.

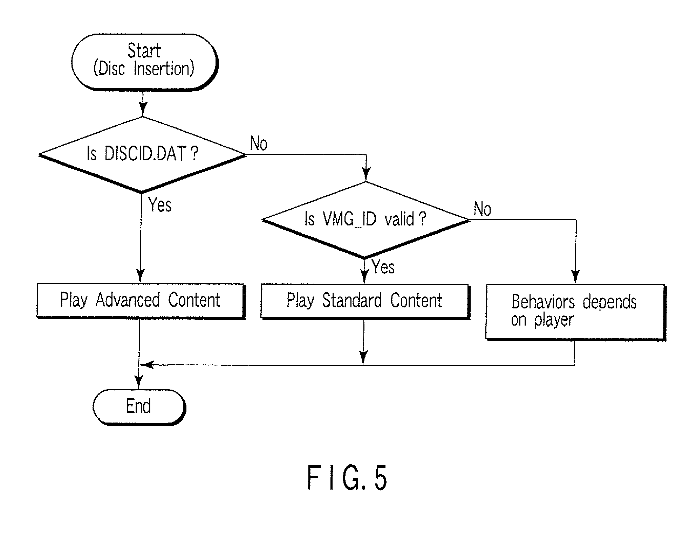

The playback processing by the player that plays back HD DVD-Video discs will be briefly described below. The player refers to a configuration file (= DISCID.DAT) recorded on a disc so as to determine what content is recorded in the disc, as shown in FIG. 5. If this configuration file is found, it is determined that the recorded content is an advanced content or interoperable content; otherwise, it is determined that the recorded content is a content other than the advanced content or interoperable content.

Assume that the configuration file is not deleted from the disc first upon generating files for the interoperable content. In this case, if the generation is interrupted due to an electric power failure or the like during generation of files for the interoperable content, the configuration file remains stored in that disc. That is, when such disc is inserted into the player, since it includes the configuration file, a content recorded on that disc is determined as an advanced content or interoperable content due to the presence of the configuration file, and related files are then referred to. However, the disc may store both old files before generation of the files for the interoperable content and new files after generation, or may store a file in the middle of generation. Upon referring to such files, the player may make an error or may find inconsistency in them.

On the other hand, if the configuration file is deleted from the disc first upon generating files for the interoperable content, even when the file generation is interrupted due to an electric power failure or the like, that disc does not store the configuration file. That is, even when such disc is inserted into the player, it does not store any configuration file. Hence, the content recorded on this disc is not determined as an interoperable content. Hence, inconsistent files are not referred to.

For the same reason as above, the generated configuration file is finally written in the disc after the generated interoperable content is written in the disc.

As described above, upon generating the interoperable content, files can be generated without any inconsistencies with the navigation data in the HD DVD-VR format or in the interoperable content.

Points of this embodiment will be summarized below.
(1) A recorder/player which records information on an HD DVD medium in the HD DVD-VR format has a function of generating an interoperable content from an HD DVD-VR content, and has a function of generating a title specified in the HD DVD-VR format as a title in the interoperable content. The recorder/player checks the type of a title specified in the HD DVD-VR format, and switches the generation processing of the interoperable content in accordance with the type of the title.
(2) When the title specified in the HD DVD-VR format includes only VOBs, the recorder/player generates an interoperable content which includes this title.
(3) When the title specified in the HD DVD-VR format includes only SOBs, the recorder/player generates an interoperable content which does not include this title. Alternatively, the recorder/player generates an interoperable content which includes a dummy title different from this title.
(4) When the title specified in the HD DVD-VR format includes both VOBs and SOBs, the recorder/player generates an interoperable content which includes a title made up only VOBs. Alternatively, when the title specified in the HD DVD-VR format includes both VOBs and SOBs, the recorder/player generates an interoperable content which does not include this title. Alternatively, the recorder/player generates an interoperable content which includes a dummy title different from this title.
(5) The recorder/player forms a dummy title only by an advanced application.
(6) The recorder/player generates an interoperable content including a menu that displays information of titles. The menu displays title types.
(7) The recorder/player plays back a title selected by a user operation. Furthermore, when a title which is included in the HD DVD-VR content and is not included in the interoperable content is selected via the menu, the recorder/player does not play back the selected title.
(8) When a title which is included in the HD DVD-VR content and is not included in the interoperable content is selected via the menu, the recorder/player informs the user that the selected title cannot be played back. That is, the menu includes information indicating that the selected menu cannot be played back.

An additional explanation will be given below about the interoperable content.

The interoperable content is defined to allow an HD DVD-Video player to play back an HD DVD-VR content on a disc.

The interoperable content is a subset of an advanced content defined in the HD DVD-Video format except for some definitions related to video objects.

Some parameters or functions related to video objects are not supported in video objects of an advanced content in the HD DVD-Video format. However, if an HD DVD-Video player has a function of playing back the interoperable content, it supports these parameters or functions. Therefore, video objects for the HD DVD-VR content are normally used as those for the interoperable content without being converted.

Navigation data of the interoperable content is a subset of navigation data of an advanced content in the HD DVD-Video format. Therefore, navigation data of an HD DVD-VR content is converted into that of the interoperable content. The navigation data supported for the interoperable content especially does not have restrictions as long as it conforms to the format of an advanced content in the HD DVD-Video format.

An example of the method of converting the navigation data is as follows.

Generation of the interoperable content is an optional function of the recorder. When the recorder supports generation of the interoperable content, conversion rules are applied.

The basic concept of conversion from the HD DVD-VR content into the interoperable content will be explained below. The interoperable content is mostly a subset of an advanced content except for some differences. The interoperable content includes at least one playlist, one primary video set (called an interoperable VTS), and one configuration file. The primary video set (i.e., interoperable VTS) further includes video title set information (VTSI), video title set time map information (VTS_TMAP), and primary enhanced video objects (P-EVOBs).

Furthermore, the interoperable content may include a secondary video set, advanced application, and advanced subtitle defined in the advanced content.

In order to attain playback as the interoperable content, the disc must include the playlist, VTSI, VTS_TMAP, P-EVOBs, and configuration file. The VTS_TMAP is equivalent to VTMAP defined in the HD DVD-VR format. Also, a P-EVOB is equivalent to a VOB defined in the HD DVD-VR format. Therefore, an HD DVD-Video player can use time map files and VOB files defined in the HD DVD-VR format without any conversion processing. Hence, in order to attain playback as interoperable content by the HD DVD-Video player, one VTSI file, one playlist file, and one configuration file must further be generated.

FIG. 6 shows the basic concept of the relationship among the conversion processing, HD DVD-VR content, and interoperable content. The VTSI is generated mainly based on information of an M_AVFIT (especially, M_VOB_STIs and M_VOBIs) in an HR_MANGR.IFO file. The playlist is generated mainly based on information of PGC information (i.e., ORG_PGCI and UD_PGCIs) in the HR_MANGR.IFO file. The contents of the configuration file are permanent in case of the interoperable content. The interoperable content does not include any navigation file related to the stream object file and the stream object file.

Rules associated with directories and files will be described below.

Upon generation of the interoperable content, the following rules are applied.
- The playlist file is allocated under an "ADV_OBJ" directory present immediately below the root directory.
- The file name of the playlist is determined as "VPLST000.XPL" for the interoperable content.
- As in the time map files and VOB file, the VTSI file is also allocated under a "DVD HDVR/HDVR_VOB" directory.
- The file name of the VTSI is determined as "HR_IVTSI.VTI" for the interoperable content.
- As defined in the HD DVD-Video format, the file names of the time map files and VOB file are respectively "HR_Vmmmm.MAP"' (mmmm: 0001 to 1998) and "HR_MOVIE.VRO.
- The configuration file is allocated under the "ADV_OBJ" directory present immediately below the root directory.
- The file name of the configuration file is determined as "DISCID. DAT" in the HD DVD-Video format.
- When the disc includes at least one of the VTSI (HR_IVTSI.VTI), playlist (VPLST000.XPL), and configuration file (DISCID.DAT), it includes all these files, which match each other. Furthermore, these files match the time map files (HR_Vmmmm.MAP) and VOB file (HR_MOVIE.VRO). When the HD DVD-VR content is updated and influences the corresponding VTSI or playlist, a recorder which cannot update the VTSI and playlist deletes the VTSI, playlist, and configuration file. In this case, the "ADV_OBJ" directory need not be deleted.

Details of generation of the VTSI will be described below.

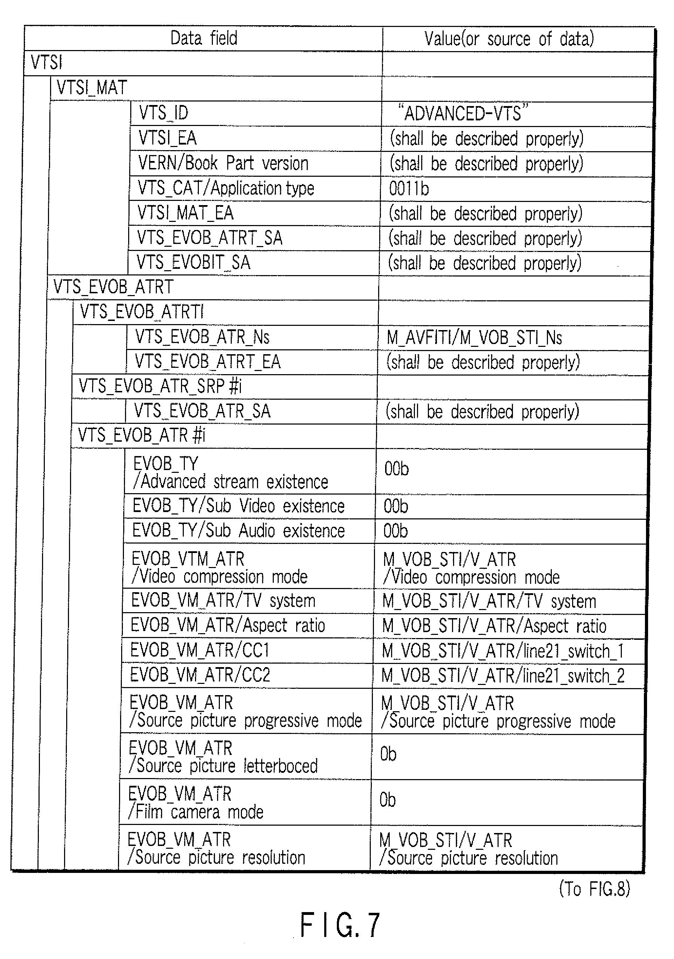

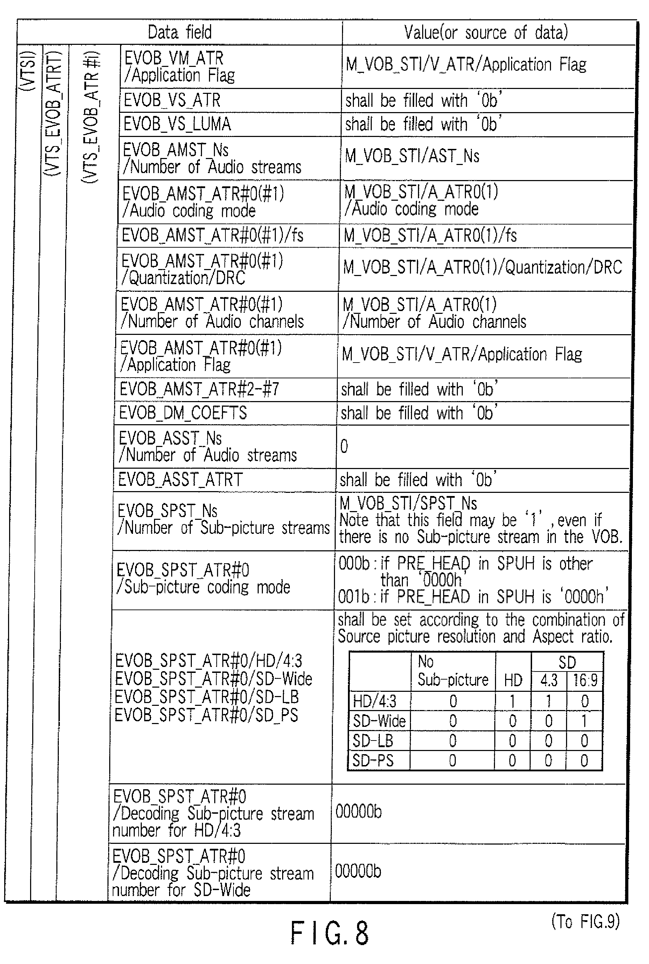

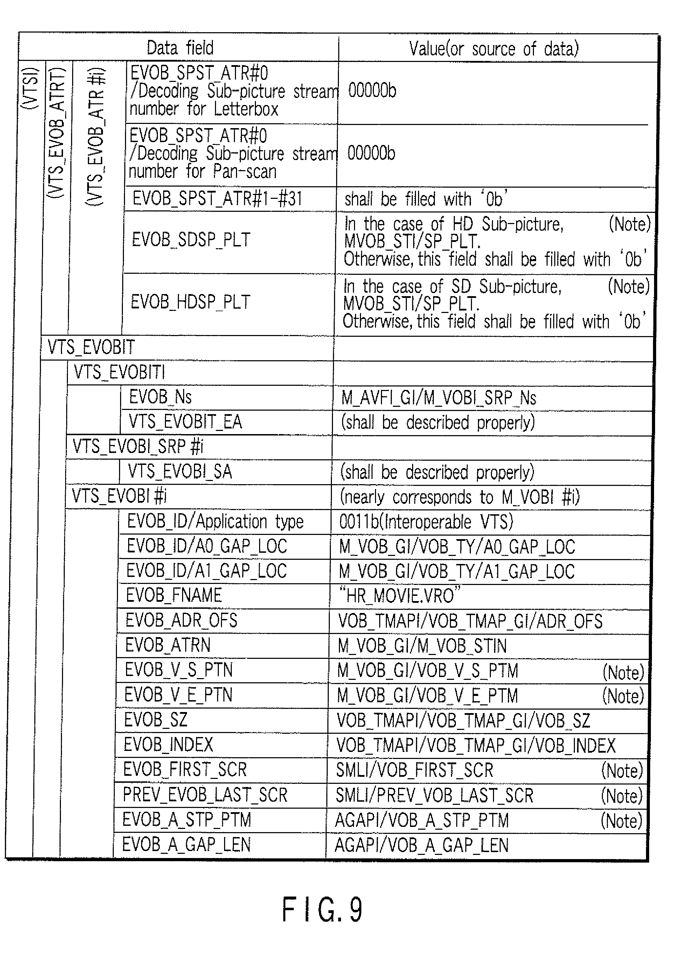

Upon generation of the interoperable content, one VTSI file "HR_IVTSI.VTI" is generated. FIGS. 7, 8, and 9 show an overview of values to be filled in data fields of the VTSI for the interoperable content. Note that FIGS. 7 to 9 are a series of tables.

Information in VTS_EVOB_ATR is mainly copied or extracted from corresponding M_VOB_STI. Information in VTS_EVOBI is mainly copied or extracted from corresponding M_VOBI.

Details of generation of the playlist will be explained below.

Upon generation of the interoperable content, one playlist file "VPLST000.XPL" is generated.

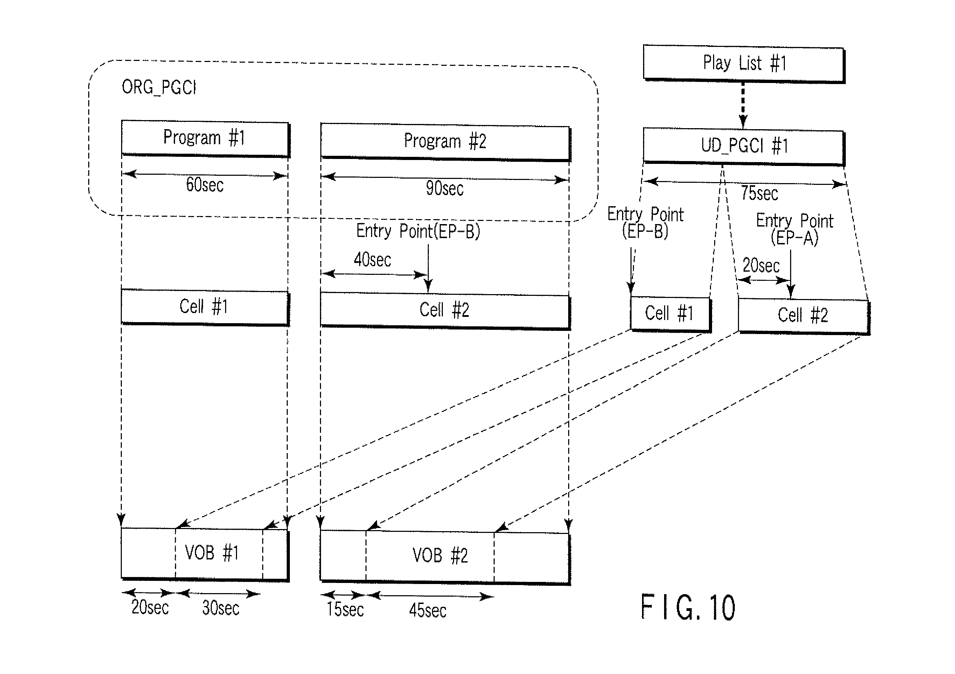

In order to explain generation of the playlist, a simple example of the HD DVD-VR content will be assumed. FIG. 10 shows conversion from the HD DVD-VR content into the interoperable content.

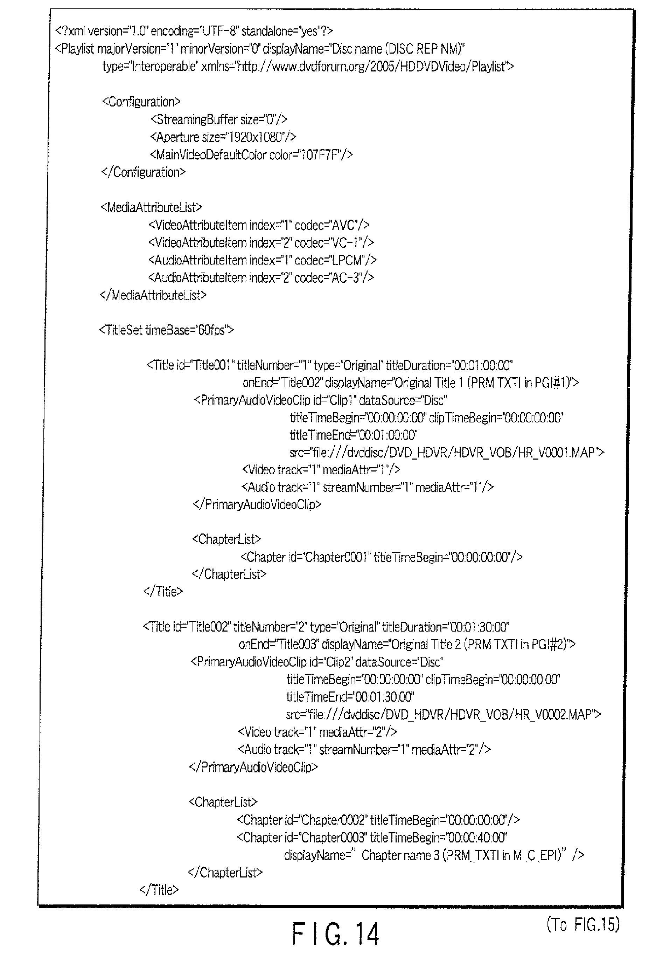

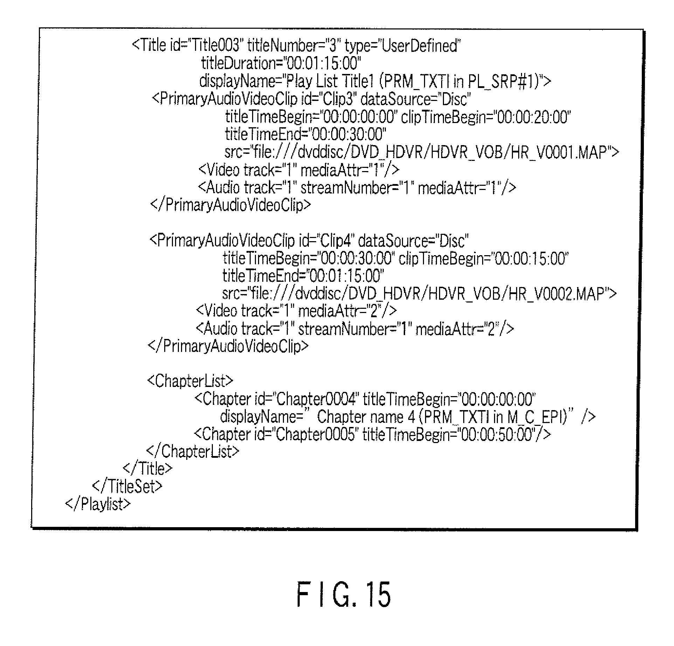

FIGS. 14 and 15 show an example of a playlist generated from the HD DVD-VR content shown in FIG. 10.

The playlist for the interoperable content allows a flexible description. The playlist described in FIGS. 14 and 15 is an example, and is generated based on the following assumptions.
- One "title" corresponds to a program (PG) or playlist (PL) in the HD DVD-VR format.
- One "chapter" corresponds to an entry point (M_C_EPI) in the HD DVD-VR format. If there is no entry point at the beginning of the PG or PL, the chapter is always present at the head of the title.
- "Display name" in the playlist corresponds to a disc representative name (DISC_REP_NM) in the HD DVD-VR format.
- "Display name" in the title corresponds to primary text information (PRM_TXTI) of the PG or PL in the HD DVD-VR format.
- "Display name" in the chapter corresponds to primary text information (PRM_TXTI) of the entry point (Type EP-B) in the HD DVD-VR format.
- "Title time" in the title is obtained from C_V_S_PTM and C_V_E_PTM in the HD DVD-VR format.
- "titleTimeBegin" and "titleTimeEnd" in a primary audio video clip are obtained from C_V_S_PTM and VOB_V_S_PTM in the HD DVD-VR format.
- "clipTimeBegin" in the primary audio video clip is obtained from C_V_S_PTM and VOB_V_S_PTM in the HD DVD-VR format.
- "titleTimeBegin" in the chapter is obtained from EP_PTM C_V_S_PTM and C_V_E_PTMs in the HD DVD-VR format.
- In order to allow playback of all titles, an attribute "onEnd" of each title (except for the last title) designates the next title.

Details of generation of the configuration file will be described below.

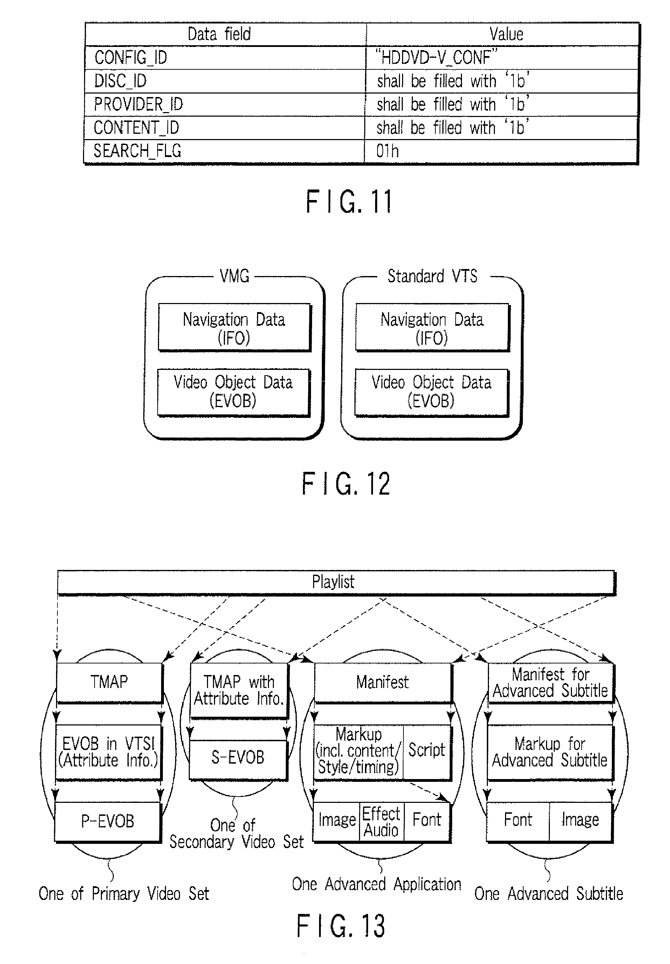

Upon generation of the interoperable content, one configuration file ("DISCID.DAT") is generated. FIG. 11 shows an overview of values to be filled in data fields of the configuration file for the interoperable content.

A few points to note in generation of the interoperable content will be described below.

Since SOBs (and navigation data associated with SOBs) fall outside the scope of the interoperable content, data structures such as STRA_CI and STRB_CI must be excluded from the conversion processing to the interoperable content. As a result, the total number of titles often becomes less than the sum total of all the programs (PGs) and playlists (PLs) of, e.g., the HD DVD-VR content.

Temporarily erased M_VOBs may not often be included in the interoperable content. In this case, the total number of P-EVOBs often becomes less than the total number of M_VOBs.

In the above description, the navigation data of the interoperable content is assumed to be generated from that of the HD DVD-VR content by "conversion". However, an actual implementation method is not limited to the conversion processing. In some implementation methods, the VTSI, playlist, and configuration file may be generated before the disc is unloaded from the recorder. Alternatively, in another implementation method, when the HD DVD-VR content is modified by the recorder, the VTSI, playlist, and configuration file may be updated.

An additional explanation will be given below about contents.

As will be described below, two types of contents are defined. One is a standard content, and the other is an advanced content.

The standard content includes navigation data and video object data on a disc. The advanced content includes advanced navigation files such as a playlist file, manifest file, markup file, and script file, and advanced data such as a primary video set/secondary video set, and advanced elements (image, audio, text, and the like). At least one playlist and primary video set are recorded in the disc including the advanced content. Other data are recorded on the disc and can be transferred from a server. As shown in FIG. 12, the standard content basically includes one VMG space and one or more VTS spaces.

The advanced content implements more interactiveness by expanding audio and video implemented by the standard content. The advanced content includes:
- playlist
- primary video set
- secondary video set
- advanced application
- advanced subtitle

The playlist provides playback information in presentation objects described in FIG. 13. For example, in order to play back the primary video set, the player reads a TMAP file using a URI described in the playlist, interprets EVOBI with reference to the TMAP, and accesses an appropriate P-EVOB defined by the EVOBI.

The playlist file is described in XML, and one or more playlist files are allocated on the disc. The player interprets the playlist file first to play back the advanced content. The playlist file includes:
- object mapping information
- track number assignment information
- track navigation information
- resource information
- playback sequence information
- system configuration information
- scheduled control information

The advanced application includes one manifest file, markup file (including content/style/timing/layout information), script file, image file, effect audio file, font file, and other files.

## Claims

1. An information recording apparatus, which converts an HD DVD Video Recording (HD DVD-VR) content recorded in an HD DVD-VR format into an interoperable content compatible with the HD DVD-Video format and records the interoperable content, **characterized by** comprising:
an analysis unit (1, 2) configured to analyze navigation data included in the HD DVD-VR content;
a generation unit (3, 4) configured to generate a playlist file and a video title set information file based on the navigation data, and to generate the interoperable content which includes the playlist file, the video title set information file, and a title including video objects included in the HD DVD-VR content; and
a recording unit (5) configured to record the interoperable content generated by the generation unit at a predetermined recording location,
wherein the generation unit switches generation processing of a title for the interoperable content in accordance with each of a first case in which the HD DVD-VR content comprises a first title which includes the video objects but does not include stream objects, a second case in which the HD DVD-VR content comprises a second title which does not include the video objects but includes the stream objects, and a third case in which the HD DVD-VR content comprises a third title which includes both the video objects and the stream objects,
the navigation data included in the HD DVD-VR content navigates playback of the video objects and stream objects included in the HD DVD-VR content,
the playlist file included in the interoperable content indicates the configuration of the title and chapters for the interoperable content, and
the video title set information included in the interoperable content indicates attributes of the video objects included in the interoperable content.

2. The apparatus according to claim 1, **characterized in that** the generation unit generates the interoperable content which comprises the first title in the first case.

3. The apparatus according to claim 1, **characterized in that** the generation unit generates the interoperable content which does not comprise the second title in the second case.

4. The apparatus according to claim 1, **characterized in that** the generation unit generates the interoperable content which comprises a dummy title different from the second title in the second case.

5. The apparatus according to claim 1, **characterized in that** the generation unit generates in the third case the interoperable content which comprises a title which has already undergone conversion processing, includes the video objects included in the third title, and does not include the stream objects included in the third title.

6. The apparatus according to claim 1, **characterized in that** the generation unit generates the interoperable content which does not comprise the third title in the third case.

7. The apparatus according to claim 1, **characterized in that** the generation unit generates the interoperable content which comprises a dummy title different from the third title in the third case.

8. The apparatus according to claim 4, **characterized in that** the generation unit generates the dummy title configured by an advanced application.

9. The apparatus according to claim 7, **characterized in that** the generation unit generates the dummy title configured by an advanced application.

10. The apparatus according to claim 1, **characterized in that** the generation unit generates the interoperable content which includes a menu that displays types of objects which form a title for the interoperable content.

11. An information playback apparatus **characterized by** comprising:
a read unit (5) configured to read a configuration file from a predetermined recording location; and
a playback unit (5) configured to play back an interoperable content compatible with the HD DVD-Video format from the predetermined recording location based on the configuration file read by the read unit,
wherein the playback unit plays back video objects which form a title in response to a selection operation of the title included in the interoperable content.

12. An information recording apparatus, which converts an video recording first content recorded in an first format into an interoperable second content compatible with a second format and records the interoperable second content,
**characterized by** comprising:
an analysis unit (1, 2) configured to analyze navigation data included in the first content;
a generation unit (3, 4) configured to generate a playlist file and a video title set information file based on the navigation data, and to generate the interoperable second content which includes the playlist file, the video title set information file, and a title including video objects
included in the first content; and
a recording unit (5) configured to record the interoperable second content generated by the generation unit at a predetermined recording location,
wherein the generation unit switches generation processing of a title for the interoperable second content in accordance with each of a first case in which the first content comprises a first title which includes the video objects but does not include stream objects, a second case in which the first content comprises a second title which does not include the video objects but includes the stream objects, and a third case in which the first content comprises a third title which includes both the video objects and the stream objects,
the navigation data included in the first content navigates playback of the video objects and stream objects included in the first content,
the playlist file included in the interoperable second content indicates the configuration of the title and chapters for the interoperable second content, and
the video title set information included in the interoperable second content indicates attributes of the video objects included in the interoperable second content.
